(19) Europäisches Patentamt
European Patent Office
Office européen des brevets

(11) **EP 3 759 344 B1**

(12) **EUROPEAN PATENT SPECIFICATION**

(45) Date of publication and mention
of the grant of the patent:
**03.11.2021 Bulletin 2021/44**

(51) Int Cl.:
**F03D 17/00** *(2016.01)*

(21) Application number: **19779360.7**

(22) Date of filing: **23.09.2019**

(86) International application number:
**PCT/DK2019/050281**

(87) International publication number:
**WO 2020/064072 (02.04.2020 Gazette 2020/14)**

(54) **A METHOD FOR IMPROVING REPORTING OF OPERATIONAL DATA OF A WIND TURBINE**

VERFAHREN ZUR VERBESSERUNG DER MELDUNG VON BETRIEBSDATEN EINER
WINDTURBINE

PROCÉDÉ D'AMÉLIORATION DE TRANSMISSION DE RAPPORT DE DONNÉES
OPÉRATIONNELLES D'UNE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2018 DK PA201800635**

(43) Date of publication of application:
**06.01.2021 Bulletin 2021/01**

(73) Proprietor: **Scada International A/S
8600 Silkeborg (DK)**

(72) Inventor: **LOVMAND, Bo
8370 Hadsten (DK)**

(74) Representative: **Rasmussen, Martin Hoffgaard et
al
Otello Law Firm
Dalgasgade 25, 8.
7400 Herning (DK)**

(56) References cited:
**EP-A1- 2 866 190          WO-A1-03/029648
US-A1- 2014 203 562          US-A1- 2015 308 413**

**Description**

**Field of the invention**

The present invention relates in general to the field of wind turbines. More specifically the present invention relates in a first aspect to a method for improving reporting of operational data from a wind turbine during operation thereof.

In a second aspect the present invention relates to the use of interpolation of data relating to accumulated total energy produced by a wind turbine in respect of two time segments determining an estimated total energy production in respect of said specific time segment.

In a third aspect the present invention relates to a computer program product being configured for performing a method according to the first aspect of the present invention.

In a fourth aspect the present invention relates to a SCADA system (Supervisory Control And Data Acquisition System).

**Background of the invention**

Within the field of wind turbines and the operation thereof it is customary that the manufacturer which has manufactured the wind turbine or pats thereof is/are different from the company responsible for operating the wind turbine or wind farm.

In order to secure or guarantee the operator's viable economy in respect of operating a wind turbine or a wind farm it is customary that a contract is agreed between the manufacturer of the wind turbine or parts thereof one the one hand and the operator of the wind turbine or wind farm, on the other hand.

In such a contract it is stipulated which types of faults, errors and special conditions leading to missing or reduced power production is the responsibility of the producer and which types of faults, errors and special conditions leading to missing or reduced power production is the responsibility of the operator.

Typically, such a contract will also contain detailed calculation schedule dividing the value represented by the power produced by a wind turbine between the manufacturer and the operator according to predetermined schedule of allocations. Hereby the manufacturer will have an incentive to continuously improve the quality of the components making up the wind turbine in order to reduce the downtime of the wind turbine. This will eventually secure an optimum energy production.

A wind turbine is operated by the use of a control system which monitors a vast number of parameters associated with the operation of the wind turbine.

The monitoring of the parameters is performed by using a number of sensors arranged in and on the wind turbine. Each sensor is responsible for sensing a specific parameter or group of parameters.

The control system is configured to use the parameters sensed by the sensors as inputs in the calculation of a feedback procedure. In this way a wind turbine can be operated automatically according to a predetermined algorithm using monitored parameters, sensed by sensor, to create a feedback response which in turn is used for controlling the wind turbine.

In addition to using the parameters sensed by the sensors as inputs in the calculation of a feedback procedure for controlling the wind turbine, the control system is also configured, from the sensed parameters, to determine whether or not a critical event has happened.

A critical even will make the control system instruct the wind turbine to shut down, i.e. to bring the wind turbine into a state in which the rotor stops rotating so that no power is being produced.

Many different parameter values sensed by the sensors, or combination thereof, may lead to a situation in which the control system has been predetermined to identify a critical event and subsequently shut down the wind turbine. Each such critical event situation is associated with an associated alarm ID, identifying which type of critical event is the cause for shutting down the wind turbine.

The sensors may also individually or collectively sense situations in respect of which the control system has been configured to transmit a warning signal, meaning that some operational parameters of the wind turbine need special attention. A warning does not lead to shutting down the wind turbine.

Typically, a control system of a wind turbine is coupled to a monitoring system which receives and stores, on a data storage, operational data relating to the operation of the wind turbine.

Such operational data may specifically comprise information relating to the setting and resetting of various alarms and warnings being send to the control system, but also relate to information associated with the magnitude of the power produced by the wind turbine.

Accordingly, the operational data may represent valuable information in the process of determining the amount of time in which the wind turbine, or specific parts thereof, have been operating properly or improperly, and especially may represent valuable data relating to the power being produced by the wind turbine at a given time or period of time.

As already indicated such information is used when dividing the value represented by the power produced by a wind turbine between the operator, operating the wind turbine on the one hand, and the manufacturer(s) of the wind turbine or parts thereof, on the other hand.

However, even in a situation in which no such contract exists or in a situation in which the term of such a contract has expired, it is of high interest for the operator of the wind turbine to continuously gain information relating to the operational state of the wind turbine, including information relating to the instant power production of the wind turbine in respect of different time segments.

Now, it may happen that the data received by the monitoring system from the control system and relating to operational data, is not being properly transmitted from the control system of the wind turbine to the monitoring system.

In case such relating data relates to the power being produced by the wind turbine at a given time or period of time, the data registered by the monitoring system does not represent an accurate picture of the efficiency the wind turbine during operation thereof.

It is clear that an inaccurate picture of the efficiency of a wind turbine during time periods of its operation will lead to an allocation of the value represented by the power produced by a wind turbine between the manufacturer and the operator in a way which deviates from the true situation and thereby the actual allocation of value being produced does not comply with the original intention as stipulated by the contract agreed between the operator and the manufacturer of the wind turbine.

In any event, even in a case no such contract exists or in a case where the term of such a contract has expired, it is still of high interest of the operator of the wind turbine to continuously gain information relating to the efficiency of the wind turbine.

The need to correctly monitor the amount of power being produced by a wind turbine applies equally well in respect of active power produced and reactive power produced by the wind turbine.

Accordingly, a need persists to improve reporting of operational data from a wind turbine during operation thereof.

The present invention in its various aspect seeks meet this need.

Accordingly, it is an objective of the present invention to provide methods, uses and devices which improves reporting of operational data from a wind turbine during operation thereof.

Examples of prior art solutions are provided in documents US2014203562 and EP2866190.

**Brief description of the invention**

These objectives are fulfilled according to the first, the second, the third and the fourth aspect of the present invention.

In a first aspect the present invention relates to a method for improving reporting of operational data from a wind turbine during operation thereof; said method comprising the steps of:

i) controlling the operation of said wind turbine by using a control system;

ii) in respect of a predetermined time segment allowing one or more sensors to sense one or more parameter values representing the magnitude of power production of said wind turbine and allowing said sensors to transmit said one or more parameter values to said control system;

iii) from said one or more parameter values transmitted to said control system in step ii), allowing said control system to determine a total production of energy within said time segment;

iv) from said one or more parameter values transmitted to said control system, allowing said control system to determine an accumulated value, representing an accumulated production of energy by said wind turbine until the end of said specific time segment;

v) allowing said control system to transmit, to a monitoring system, data determined in step iii) and iv);

vi) repeat steps i) - v) in respect of subsequent time segments;

vii) in respect of a time span comprising several of said time segments, allowing said monitoring system to assess the reliability of data relating to the total production of energy in a specific time segment of said time span, and optionally allowing said monitoring system to correct such data in case such information is assessed as being unreliable, thereby obtaining corrected data relating to an estimated total production of energy in respect of one or more specific time segments within said time span.

In a second aspect the present invention relates to the use of interpolation of data relating to accumulated total energy produced by a wind turbine in respect of two separated time segments, separated by a specific time segment, for determining an estimated total energy production in respect of said specific time segment.

In a third aspect the present invention relates to a computer program product, which when loaded and/or operating on a computer, being configured for performing a method according to the first aspect of the present invention.

In a fourth aspect the present invention relates to a SCADA system (Supervisory Control And Data Acquisition System) comprising a computer program product as defined in respect of the third aspect of the present invention.

The present invention in its various aspects provides for improving the reporting of operational data being received by a monitoring system from a control system of a wind turbine during operation thereof.

Especially the present invention in its various aspects provides for correcting unreliable or missing data relating to energy production of a wind turbine.

Providing more reliable data relating to the actual amount of time in which a wind turbine has been operating properly and/or the actual amount of power produced will accordingly also provide a more accurate picture of the total time the wind turbine has been subjected to stresses by the weather and to wear and tear of the mechanical parts involved in the wind turbine. Knowing more accurately, the total time the wind turbine has been operating and/or the total amount of energy produced will accordingly allow for adhering more accurately to the maintenance protocols determined by the manufacturer of the wind turbine, and hence will secure a long-term life span of the wind turbine and will thus also enhance safety to personnel working in the vicinity of the wind turbine.

**Brief description of the figures**

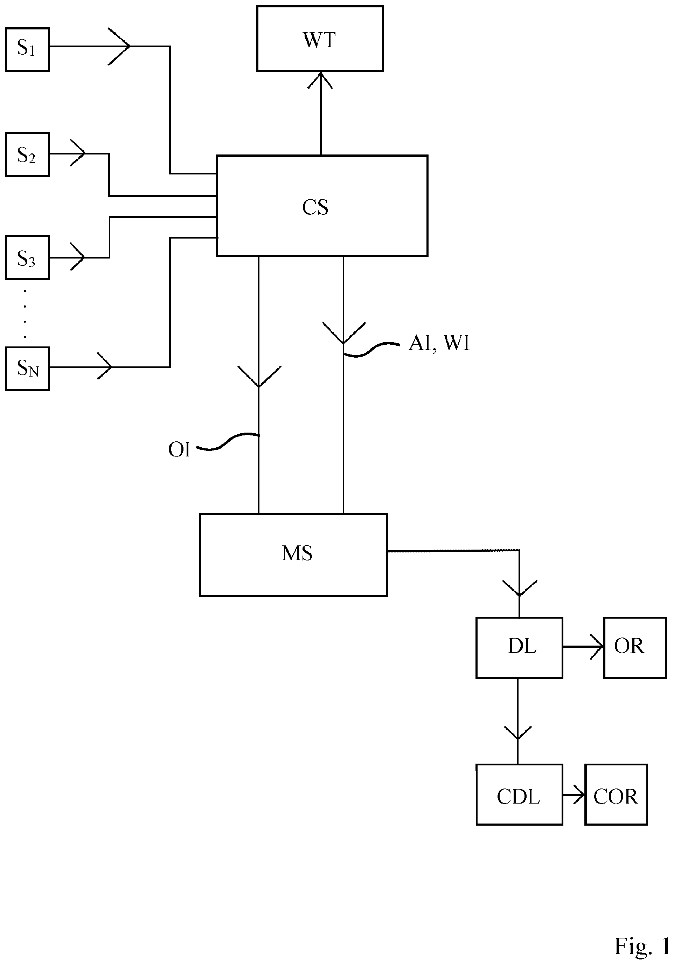

Fig. 1 schematically illustrates some of the components of a wind turbine employed in the present invention.

**Detailed description of the invention**

The first aspect of the present invention

In a first aspect the present invention relates to a method for improving reporting of operational data from a wind turbine during operation thereof; said method comprising the steps of:

i) controlling the operation of said wind turbine by using a control system;

ii) in respect of a predetermined time segment allowing one or more sensors to sense one or more parameter values representing the magnitude of power production of said wind turbine and allowing said sensors to transmit said one or more parameter values to said control system;

iii) from said one or more parameter values transmitted to said control system in step ii), allowing said control system to determine a total production of energy within said time segment;

iv) from said one or more parameter values transmitted to said control system, allowing said control system to determine an accumulated value, representing an accumulated production of energy by said wind turbine until the end of said specific time segment;

v) allowing said control system to transmit, to a monitoring system, data determined in step iii) and iv);

vi) repeat steps i) - v) in respect of subsequent time segments;

vii) in respect of a time span comprising several of said time segments, allowing said monitoring system to assess the reliability of data relating to the total production of energy in a specific time segment of said time span, and optionally allowing said monitoring system to correct such data in case such information is assessed as being unreliable, thereby obtaining corrected data relating to an estimated total production of energy in respect of one or more specific time segments within said time span.

Accordingly, in the method of the first aspect of the present invention using data available allows one to gain information relating to an accumulated production of energy in a specific time span in a situation where such data is not directly available.

In the description and in the appended claims the definition of the invention of the first aspect includes the term "allowing" followed by an action which is allowed to be performed. In this respect it should be noted that the action following the term "allowing" is not to be construed as an optional feature which may or may not be included. Rather, the term "allowing" as used in the definitions of the present invention should be construed in such a way that, in the invention, the action following the term "allowing" indeed is carried out (obviously taking into account any stated or implied conditional prerequisite).

In one embodiment of the method according to the first aspect of the present invention the data being assessed as being unreliable by said monitoring system, for one or more of the following reasons:

- data in respect of one or more of said time segments to be transmitted by said control system has not been received by said monitoring system; and/or

- data relating to accumulated production of energy by said wind turbine indicates that said accumulated production decreases over time; and/or

- data relating to accumulated production of energy by said wind turbine indicates that said accumulated production increases over time by more than is theoretically possible, considering the nominal maximum power of said wind turbine; and/or

- replacement of storage medium in control system, such as flash drive; and/or

- wrong value manually entered by a technician; and/or

- data relating to accumulated production of energy by said wind turbine jumps unreliably due to replacement of a controller or the control; and/or

- intentional or unintentional correction of the system clock of the control system; and/or

- intentional or unintentional correction of the system clock of the monitoring system and/or

- synchronizing data from one monitoring system to another monitoring system.

In one embodiment of the method according to the first aspect of the present invention the parameter values representing power production of said wind turbine as determined in step ii) relates to one or more of the following:

- average power produced in respect of said time segment; and/or

- total production of energy in respect of said time segment.

In one embodiment of the method according to the first aspect of the present invention data being assessed as being unreliable is being corrected by interpolation of data.

Hereby is achieved with the method of the first aspect to provide more accurate data relating to the productivity of the wind turbine.

In one embodiment of the method according to the first aspect of the present invention and in respect of a specific segment in respect of which the total production of energy in that time segment is assessed as being unreliable, said estimated total production of energy is found by performing an interpolation between data relating to an accumulated production of energy by said wind turbine until the end of a first time segment and data relating to an accumulated production of energy by said wind turbine until the end of a second time segment; wherein said first time segment is preceding said specific segment, and wherein said second time segment is following said specific time segment.

Interpolation of such data provides in a reliable way data representing a more accurate picture of the operational status of the wind turbine, especially in terms of the productivity of the wind turbine.

In one embodiment of the method according to the first aspect of the present invention the time span is having a duration selected from the ranges 1 - 300 min., such as 2 - 270 min, e.g. 3 - 240 min., such as 4 - 210 min., such as 5 - 180 min., e.g. 6 - 120 min, such as 7 - 90 min, e.g. 8 — 60 min, such as 9 - 45 or 10 - 30 min.

Such time spans have proven suitable in exercising the method of the first aspect of the present invention.

In one embodiment of the method according to the first aspect of the present invention time segments is having a duration selected from the ranges 0.1 - 1800 s, such as 0.5 - 1500 s, such as 1 - 1200 s, for example 2 - 900 s, such as 3 - 600 s, such as 4 - 500 s, for example 5 - 400 s, such as 6 - 300 s, e.g. 7 - 200 s, such as 8 - 150 s, e.g. 9 - 100 s, such as 10 - 80 s, such as 15 - 60 s or 30 - 45 s.

These durations of time segments are suitable for being employed in the method according to the first aspect of the present invention.

In one embodiment of the method according to the first aspect of the present invention each time segment within said time span are having equal durations.

Hereby the handling of data becomes less complicated.

In one embodiment of the method according to the first aspect of the present invention the method is being performed automatically.

In one embodiment of the method according to the first aspect of the present invention the method is being performed continuously or regularly in respect of successive time spans.

These two embodiments in a conveniently way ensures continuous improvement of reporting of operational data.

In one embodiment of the method according to the first aspect of the present invention the one or more of said sensors in step ii) senses one or more parameter values representing active power production of said wind turbine and/or reactive power production of said wind turbine and/or active energy produced by said wind turbine and/or reactive energy produced by said wind turbine.

Hereby a more accurate picture reflecting the true operational situation of the wind turbine can be obtained.

In one embodiment of the method according to the first aspect of the present invention the method involves keeping a data log, logging a data set originating from said monitoring system and relating to one or more of the following entries: data determined in step ii) and/or iii) and/or iv); time stamps of start and/or end of individual time segments within said time span; corrected data as determined in step vii); time stamps relating to the start and/or end of said time span.

Keeping a data log ensures the ability to inspect data which has been logged at a point in time subsequent to the time of logging.

In one embodiment of the method according to the first aspect of the present invention the corrected data as determined in step vii) relates to an estimated total production of energy in one or more specific time segments of said time span.

In one embodiment of the method according to the first aspect of the present invention the a first original data log is being kept which logs and stores original data received by the monitoring system; and wherein a second data log is being kept, which logs and stores logs corrected data which represents original data which has been corrected by the method according to the invention of the first aspect.

Hereby the original data is easily distinguishable from the corrected data.

## The second aspect of the present invention

In a second aspect the present invention relates to the use of interpolation of data relating to accumulated total energy produced by a wind turbine in respect of two separated time segments, separated by a specific time segment, for determining an estimated total energy production in respect of said specific time segment.

In one embodiment of the use according to the second aspect of the present invention the data relating to accumulated total energy produced by a wind turbine in respect of said specific time segment is data which is missing or which is considered unreliable.

In one embodiment of the use according to the second aspect of the present invention, the use involves determination, by measurement, of said accumulated total energy produced in respect of said two separated time segments.

## The third aspect of the present invention

In a third aspect the present invention relates to a computer program product, which when loaded and/or operating on a computer, being configured for performing a method according to the first aspect of the present invention.

## The fourth aspect of the present invention

In a fourth aspect the present invention relates to a SCADA system (Supervisory Control And Data Acquisition System) comprising a computer program product as defined in respect of the third aspect the present invention.

Referring to the figure in order to better illustrating the present invention, Fig. 1 is a schematic diagram which in a very simplified manner illustrates the operation of a wind turbine.

Fig. 1 shows the wind turbine WT which is being controlled by a control system CS according to a predetermined control algorithm. A number of sensors $S_1$, $S_2$, $S_3$... $S_N$ sense various parameter values during the operation of the wind turbine. These parameter values are being transmitted to the control system CS.

Accordingly, the parameter values being transmitted to the control system is used as input in the algorithm determining a proper feedback reaction in respect of operating the wind turbine.

Various operation data is being sent to a monitoring system MS during operation of the wind turbine.

In addition to merely receiving parameter values from the sensors $S_1$, $S_2$, $S_3$... $S_N$ and providing feedback in the operation of the wind turbine, the control system CS is also configured, from the parameter values received from the sensors $S_1$, $S_2$, $S_3$... $S_N$, to determine whether or not a critical event has been encountered which could jeopardize the short time and/or long time integrity of the wind turbine or components thereof. The determination of whether or not a critical event has occurred is being provided according to a predetermined algorithm.

In case the control system detects that a critical event is present, the control system instruct the wind turbine WT to shut down.

The control system is also configured, from the data received from the sensors $S_1$, $S_2$, $S_3$... $S_N$ to provide a warning in case certain components or combination(s) thereof need special attention. A warning will not cause the wind turbine to shut down.

Accordingly, the control system CS provides the monitoring system MS with operational information OI relating to the operational state of the wind turbine WT, with alarm information AI relating to settings og one or more alarms during the operation of the wind turbine and warning information WI relating to the provision of warnings which need special attention during operation of the wind turbine WT.

Part of the operational information OI may relate to the instant power being produced by the wind turbine, either momentarily or during a time segment, such as being expressed as an average power production during such time segment.

The information relating to instant power being produced by the wind turbine is sensed by one or more of the sensors $S_1$, $S_2$, $S_3$... $S_N$.

The operational information OI , the alarm information AI and the warning information WI received by the monitoring system MS may be logged in a data log DL. From the data log DL may be retrieved an operational report OR, setting out details relating to the operation of the wind turbine, especially the duration of time periods at which the wind turbine WT or specific components thereof are operating properly or not properly.

The operational report OR is used in the calculation of the sharing of the value represented by the power produced by the wind turbine between the operator of the wind turbine on the one hand and the manufacturer of the wind turbine, or parts thereof on the other hand.

Besides, valuable information relating to the power being produced can be inspected from the operational report OR for the purpose of general interest.

In a situation in which, for whatever reason, the monitoring system MS does not receive correct information relating to the operational information OI, it is clear that the data log DL, from which the operational report OR is retrieved, will not reflect the true operational state of the wind turbine WT.

In case the data which the monitoring system has not received, related to power being produced valuable and reliable information relating to the true efficiency of the wind turbine will not be available.

Thereby, the calculation of the value represented by the power produced by the wind turbine, and the allocation thereof, between the operator of the wind turbine on the one hand manufacturer of the wind turbine, or parts thereof on the other hand, will not be performed in accordance with the original intentions agreed upon.

Besides, in general in such a situation a correct picture of the efficiency of the wind turbine will not be available.

The present invention in its various aspects seeks to alleviate or even eliminate such problems.

Referring to Fig. 1 again, the corrected or estimated information obtained in the method of the first aspect of the present invention may be logged in a corrected data log CDL from which a corrected operational report COR may be retrieved.

**Examples**

Example 1

This example illustrates the operation of a 3 MW wind turbine being operated by a control system.

The control system receives one or more parameter values representing power production of said wind turbine from one or more sensors being coupled to that control system. From the parameter values being transmitted from the sensor(s), the control system determines a total production of power in respect of successive time segment.

Moreover, the control system also calculates an accumulated value, representing an accumulated production of energy by the wind turbine until the end of each of the time segments.

The information relating to a total production of power in respect of successive time segments and the information relating to accumulated production of power by the wind turbine until the end of each of the time segment are being transmitted to a monitoring system.

Table 1 below illustrates data which has been transmitted by the control system and which has been received by the monitoring system.

**Table 1**

| Time stamp at end of segment | Average power produced (kW) | Energy production in segment (kWh) | Accumulated production of energy by wind turbine until the end of said time segment (kWh) |
|---|---|---|---|
| 10:00 | 2,400 | 400 | 231,423,1000 |
| 10:10 | 2,400 | 400 | 231,423,1400 |
| 10:20 | 2,400 | 400 | 231,423,1800 |
| 10:30 | No data | No data | No data |
| 10:40 | No data | No data | No data |
| 10:50 | 2,400 | 400 | 231,423,2600 |
| 11:00 | 2,400 | 400 | 231,423,3000 |
| 11:10 | 2,400 | 400 | 8,231,423,8000 |
| 11:20 | 2,400 | 400 | 8,231,423,8400 |

Table 1 illustrates data collected in a time span having end points ranging from 10:00 to 11:20. Successive time segments are separated by a period of time of 10 min.

It is seen in table 1 that the control system has registered time stamps in respect of data detected. These time stamps appears in the leftmost column. Moreover, as appearing from the second column, also data relating to the average power produced in respect of each time segment of 10 min.

From the first two columns, the control system calculates the energy production in each time segment (the product of duration of each time segment and the average power produced in that time segment). These values appear in the third column of table 1.

Finally, the control system has also transmitted to the monitoring system data relating to an accumulated production of energy by wind turbine until the end of said time segment. This data appears in the rightmost column.

Now, for some reason data has been missed in the transmission from the control system to the monitoring system. The missing data is data in respect of time segments of 10 min. duration ending at 10:30 and 10:40, respectively.

Accordingly, without taken any actions, the monitoring system would have to exclude information relating to the energy production produced in the time segments ending at 10:30 and 10.40, respectively.

However, the method of the fist aspect of the present invention, enables providing an estimation of the total production of power in respect of these time segments.

These estimates are arrived at by performing an interpolation between the accumulated production of energy by wind turbine (last column) in respect of the time segment ending immediately before the time segment ending at 10:30 (i.e. the time segment ending at 10:20) and the time segment ending immediately subsequent to the time segment ending at 10:40 (i.e. the time segment ending at 10:50).

Hereby, in respect of the time segments ending at 10:30 and 10:40, respectively, we find that an estimated energy production in the time segments ending at 10:30 and 10:40, respectively is:

$$(231{,}423{,}2600 \text{ kWh} - 231{,}423{,}1800 \text{ kWh} - 400 \text{ kWh})\,/2 = 200 \text{ kWh}.$$

It is also seen in Table 1 that somewhere in the period between 11:00 and 11:10 the data relating to accumulated production of energy by wind turbine until the end of the corresponding time segment suddenly jumps by a very large magnitude (from 231,423,3000 kWh to 8,231,423,8000 kWh). As the wind turbine of this example is a 3 MW turbine, it is clear that the value of 8,231,423,8000 kWh cannot be correct.

In case the information relating to an accumulated production of energy by the wind turbine until the end of said time segment was the only information being logged by the monitoring system, no proper reporting relating to the energy production in the segment relating to the period of time from 11:00 to 11:10 would have been possible, because this data would necessarily have to be calculated from the data relating to accumulated production of energy (rightmost column).

According to the method of the first aspect of the present invention it is possible to provide an estimation of the magnitude of the energy production in the segment of time ranging from 11:00 to 11:10.

Accordingly, using the data relating to average power produced in the specific segment ranging from 11:00 to 11:10 (= 2,400 kW), the estimated energy production in the segment ranging from 11:00 to 11:10 can be assessed as:

$$2,400 \text{ kW x } 1/6 \text{ h} = 400 \text{ kWh}.$$

This value may accordingly be logged and stored, such as in a corrected data log, as an estimated total production of energy in respect of the time segment ranging from 11:00 to 11:10.

Moreover, the estimated total production of energy in respect of the time segment ranging from 11:00 to 11:10 of 400 kWh may be employed to provide estimated data relating to the accumulated production of energy by wind turbine until the end of the time segment ending at 11:10. This estimated data would then be:

$$231,423,3000 \text{ kWh} + 400 \text{ kWh} = 231,423,3400 \text{ kWh}.$$

Example 2

In this example the same wind turbine with its corresponding components as employed in Example 1 is used.

Table 2 below illustrates data which has been transmitted by the control system and which has been received by the monitoring system.

**Table 2**

| Time stamp at end of segment | Average power produced (kW) | Energy production in segment (kWh) | Accumulated production of energy by wind turbine until the end of said time segment (kWh) |
|---|---|---|---|
| 10:00 | 2,400 | 400 | 231,423,1000 |
| 10:10 | 2,400 | 400 | 231,423,1400 |
| 10:20 | No data | No data | No data |
| 10:30 | No data | No data | No data |
| 10:40 | 2,400 | 400 | 600 |
| 10:50 | 2,400 | 400 | 1,000 |

It is seen in Table 2 to that the monitoring system misses date transmitted from the control system in respect of the time segments having end points at 10:20 and 10:30, respectively.

It is also seen from Table 2 that during the period of time of missing data, the counter counting an accumulated production of energy by wind turbine until the end of said time segment (rightmost column in Table 2), has been reset (as evidenced by the fact that the counter is at 600 kWh at the end of the time segment ending at 10:40).

The estimated total production of energy in respect of the time segments ending at 10:20 and 10:30, respectively can be estimated as:

$$(600 \text{ kWh} - 400 \text{ kWh})/2 = 100 \text{ kWh}.$$

This value may accordingly be logged and stored, such as in a corrected data log, as an estimated total production of energy in respect of the time segment ending at 11:20 and 11:3, respectively.

The scope of the invention is defined by the appended claims.

**List of reference numerals**

WT    Wind turbine
CS    Control system
MS    Monitoring system
DL    Data log

OR      Operational report originating from Data log
CDL     Corrected data log
COR     Corrected operational report originating from Corrected data log
AI      Alarm information
WI      Warning information
OI      Operational information
$S_1$     Sensor No. 1 monitoring the operation of the wind turbine
$S_2$     Sensor No. 2 monitoring the operation of the wind turbine
$S_3$     Sensor No.3 monitoring the operation of the wind turbine
$S_N$     Sensor No. N monitoring the operation of the wind turbine

**Claims**

1. A method for improving reporting of operational data from a wind turbine (WT) during operation thereof; said method comprising the steps of:

   i) controlling the operation of said wind turbine (WT) by using a control system (CS);
   ii) in respect of a predetermined time segment allowing one or more sensors ($S_1$, $S_2$, $S_3$, ..., $S_N$) to sense one or more parameter values representing the magnitude of power production of said wind turbine and allowing said sensors to transmit said one or more parameter values to said control system (CS);
   iii) from said one or more parameter values transmitted to said control system (CS) in step ii), allowing said control system to determine a total production of energy within said time segment;
   iv) from said one or more parameter values transmitted to said control system (CS), allowing said control system to determine an accumulated value, representing an accumulated production of energy by said wind turbine until the end of said specific time segment;
   v) allowing said control system (CS) to transmit, to a monitoring system (MS), data determined in step iii) and iv);
   vi) repeat steps i) - v) in respect of subsequent time segments;
   vii) in respect of a time span comprising several of said time segments, allowing said monitoring system (MS) to assess the reliability of data relating to the total production of energy in a specific time segment of said time span, and optionally allowing said monitoring system (MS) to correct such data in case such information is assessed as being unreliable, thereby obtaining corrected data relating to an estimated total production of energy in respect of one or more specific time segments within said time span.

2. A method according to claim 1, wherein in step vii) said data being assessed as being unreliable by said monitoring system (MS), for one or more of the following reasons:

   - data in respect of one or more of said time segments to be transmitted by said control system (CS) not been received by said monitoring system (MS); and/or
   - data relating to accumulated production of energy by said wind turbine (WT) indicates that said accumulated production decreases over time; and/or
   - data relating to accumulated production of energy by said wind turbine (WT) indicates that said accumulated production increases over time by more than is theoretically possible, considering the nominal maximum power of said wind turbine; and/or
   - replacement of storage medium in control system, such as flash drive; and/or
   - wrong value manually entered by a technician; and/or
   - data relating to accumulated production of energy by said wind turbine (WT) jumps unreliably due to replacement of a controller or the control; and/or
   - intentional or unintentional correction of the system clock of the control system; and/or
   - intentional or unintentional correction of the system clock of the monitoring system and/or
   - synchronizing data from one monitoring system to another monitoring system.

3. A method according to claim 1 or 2, wherein said parameter values representing power production of said wind turbine as determined in step ii) relates to one or more of the following:

   - average power produced in respect of said time segment; and/or
   - total production of energy in respect of said time segment.

**4.** A method according to any of the preceding claims, wherein in step vii) said data being assessed as being unreliable is being corrected by interpolation of data.

**5.** A method according to claim 4, wherein in respect of a specific segment in respect of which the total production of energy in that time segment is assessed as being unreliable, said estimated total production of energy is found by performing an interpolation between data relating to an accumulated production of energy by said wind turbine until the end of a first time segment, and data relating to an accumulated production of energy by said wind turbine until the end of a second time segment; wherein said first time segment is preceding said specific segment, and wherein said second time segment is following said specific time segment.

**6.** A method according to any of the preceding claims, wherein each time segment within said time span are having equal durations.

**7.** A method according to any of the preceding claims, wherein said method is being performed automatically;
and/or
wherein said method is being performed continuously or regularly in respect of successive time spans.

**8.** A method according to any of the preceding claims, wherein one or more of said sensors ($S_1$, $S_2$, $S_3$, ..., $S_N$) in step ii) senses one or more parameter values representing active power production of said wind turbine and/or reactive power production of said wind turbine and/or active energy produced by said wind turbine and/or reactive energy produced by said wind turbine.

**9.** A method according to any of the preceding claims, wherein said method involves keeping a data log (DL), logging a data set originating from said monitoring system (MS) and relating to one or more of the following entries: data determined in step ii) and/or iii) and/or iv); time stamps of start and/or end of individual time segments within said time span; corrected data as determined in step vii); time stamps relating to the start and/or end of said time span.

**10.** A method according to claim 9, wherein said corrected data as determined in step vii) relates to an estimated total production of energy in one or more specific time segments of said time span;
and/or
wherein a first original data log (DL) is being kept which logs and stores original data received the monitoring system; and wherein a second data log (CDL) is being kept, which logs and stores logs corrected data which represents original data which has been corrected by the method according to any of the previous claims.

**11.** Use of interpolation of data provided by a method according to claim 1, relating to accumulated total energy produced by a wind turbine (WT) in respect of two separated time segments, separated by a specific time segment, for determining an estimated total energy production in respect of said specific time segment.

**12.** Use according to claim 11, wherein the data relating to accumulated total energy produced by a wind turbine (WT) in respect of said specific time segment is data which is missing or which is considered unreliable.

**13.** Use according to claim 11 or 12, wherein said use involves determination, by measurement, of said accumulated total energy produced in respect of said two separated time segments.

**14.** A computer program product comprising instructions which, when the program is executed by a computer, cause the computer to carry out the steps of a method according to any of the claims 1 — 10.

**15.** A SCADA system (Supervisory Control And Data Acquisition System) comprising a computer program product as defined in claim 14.

**Patentansprüche**

**1.** Verfahren zum Verbessern der Meldung von Betriebsdaten von einer Windkraftanlage (WT) während dem Betrieb dieser; wobei das Verfahren die folgenden Schritte umfasst:

i) das Steuern des Betriebs der Windkraftanlage (WT) unter Verwendung eines Steuerungssystems (CS);
ii) in Bezug auf ein vorbestimmtes Zeitsegment, das Ermöglichen eines oder mehrerer Sensoren ($S_1$, $S_2$, $S_3$, ...,

$S_N$), einen oder mehrere Parameterwerte abzutasten, die das Ausmaß der Stromerzeugung der Windkraftanlage repräsentieren, und das Ermöglichen der Sensoren, den einen oder die mehreren Parameterwerte an das Steuerungssystem (CS) zu übertragen;

iii) das Ermöglichen des Steuerungssystems, von dem einen oder den mehreren Parameterwerten, die in Schritt ii) an das Steuerungssystem (CS) übertragen wurden, eine Gesamterzeugung von Energie innerhalb des Zeitsegments zu bestimmen;

iv) das Ermöglichen des Steuerungssystems, von dem einen oder den mehreren Parameterwerten, die an das Steuerungssystem (CS) übertragen wurden, einen Endwert zu bestimmen, der eine Enderzeugung von Energie durch die Windkraftanlage bis zum Ende des spezifischen Zeitsegments repräsentiert;

v) das Ermöglichen des Steuerungssystems (CS), Daten, die in Schritt iii) und iv) bestimmt wurden, an ein Überwachungssystem (MS) zu übertragen;

vi) das Wiederholen der Schritte i)—v) bezüglich darauffolgender Zeitsegmente;

vii) das Ermöglichen des Überwachungssystems (MS), bezüglich einer Zeitspanne, umfassend mehrere der Zeitsegmente, die Zuverlässigkeit der Daten betreffend die Gesamterzeugung von Energie in einem spezifischen Zeitsegment der Zeitspanne auszuwerten, und optional das Ermöglichen des Überwachungssystems (MS), solche Daten zu korrigieren, falls solche Informationen als unzuverlässig gewertet werden, wodurch korrekte Daten betreffend eine geschätzte Gesamterzeugung von Energie bezüglich des einen oder der mehreren spezifischen Zeitsegmente innerhalb der Zeitspanne erhalten werden.

2. Verfahren nach Anspruch 1, wobei in Schritt vii) die Daten durch das Überwachungssystem (MS) als unzuverlässig gewertet werden, aus einem oder mehreren der folgenden Gründe:

- Daten bezüglich eines oder mehrerer der Zeitsegmente, die von dem Steuerungssystem (CS) übertragen wurden, wurden nicht von dem Überwachungssystem (MS) erhalten; und/oder
- Daten bezüglich einer Enderzeugung von Energie von der Windkraftanlage (WT) deuten darauf hin, dass die Enderzeugung über einen Zeitraum nachlässt; und/oder
- Daten bezüglich einer Enderzeugung von Energie von der Windkraftanlage (WT) deuten darauf hin, dass sich die Enderzeugung über einen Zeitraum um mehr als theoretisch möglich ist, in Anbetracht des nominalen Maximalstroms der Windkraftanlage, erhöht; und/oder
- Austausch eines Speichermediums in dem Steuerungssystem, wie z. B. ein Speicherstick; und/oder
- es wurde ein falscher Wert manuell von einem Techniker eingegeben; und/oder
- Daten bezüglich einer Enderzeugung von Energie von der Windkraftanlage (WT) sind unzuverlässig sprunghaft aufgrund eines Austauschs einer Steuereinheit oder der Steuerung; und/oder
- absichtliche oder unabsichtliche Korrektur der Systemuhr des Steuerungssystems; und/oder
- absichtliche oder unabsichtliche Korrektur der Systemuhr des Überwachungssystems; und/oder
- Synchronisation von Daten von einem Überwachungssystem zum anderen Überwachungssystem.

3. Verfahren nach Anspruch 1 oder 2, wobei sich die Parameterwerte, welche die Stromerzeugung der Windkraftanlage repräsentieren, wie in Schritt ii) bestimmt auf eines oder mehrere der Folgenden beziehen:

- den durchschnittlich erzeugten Strom bezüglich des Zeitsegments; und/oder
- die Gesamterzeugung von Energie bezüglich des Zeitsegments.

4. Verfahren nach einem der vorstehenden Ansprüche, wobei die in Schritt vii) als unzuverlässig gewerteten Daten durch Interpolation von Daten korrigiert werden.

5. Verfahren nach Anspruch 4, wobei bezüglich eines spezifischen Segments in Bezug darauf, welche der Gesamterzeugung von Energie in diesem Zeitsegment als unzuverlässig gewertet wurde, die geschätzte Gesamterzeugung von Energie durch das Durchführen einer Interpolation zwischen Daten bezüglich einer Enderzeugung von Energie durch die Windkraftanlage bis zu dem Ende eines ersten Zeitsegments, und Daten bezüglich einer Enderzeugung von Energie von der Windkraftanlage bis zu dem Ende eines zweiten Zeitsegments gefunden werden; wobei das erste Zeitsegment dem spezifischen Segment vorangeht, und wobei das zweite Zeitsegment dem spezifischen Zeitsegment folgt.

6. Verfahren nach einem der vorstehenden Ansprüche, wobei jedes Zeitsegment innerhalb der Zeitspanne eine gleichwertige Dauer aufweist.

7. Verfahren nach einem der vorstehenden Ansprüche, wobei das Verfahren automatisch durchgeführt wird;

und/oder
wobei das Verfahren kontinuierlich oder regelmäßig bezüglich aufeinanderfolgenden Zeitspannen durchgeführt wird.

8. Verfahren nach einem der vorstehenden Ansprüche, wobei einer oder mehrere der Sensoren (S$_1$, S$_2$, S$_3$, ..., S$_N$) in Schritt ii) einen oder mehrere Parameterwerte abtastet, die eine aktive Stromerzeugung der Windkraftanlage und/oder reaktive Stromerzeugung der Windkraftanlage und/oder aktive Energie, die von der Windkraftanlage erzeugt wird, und/oder reaktive Energie, die von der Windkraftanlage erzeugt wird, repräsentieren.

9. Verfahren nach einem der vorstehenden Ansprüche, wobei das Verfahren das Führen eines Datenprotokolls (DL), das Aufzeichnen eines Datensatzes, der von dem Überwachungssystem (MS) kommt, und bezüglich einer oder mehrerer der folgenden Einträge betrifft: die in Schritt ii) und/oder iii) und/oder iv) bestimmten Daten; Zeitstempel von Start und/oder Ende von einzelnen Zeitsegmenten innerhalb der Zeitspanne; die korrigierten Daten, wie in Schritt vii) bestimmt; Zeitstempel betreffend den Start und/oder das Ende der Zeitspanne.

10. Verfahren nach Anspruch 9, wobei die in Schritt vii) bestimmten korrigierten Daten eine geschätzte Gesamterzeugung von Energie in einem oder mehreren spezifischen Zeitsegmenten der Zeitspanne betreffen;
und/oder
wobei ein erstes Original-Datenprotokoll (DL) geführt wird, das Originaldaten, die von dem Überwachungssystem empfangen werden, aufzeichnet und speichert; und wobei ein zweites Datenprotokoll (CDL) geführt wird, das korrigierte Daten aufzeichnet und speichert, die Originaldaten repräsentieren, die durch das Verfahren nach einem der vorstehenden Ansprüche korrigiert wurden.

11. Verwendung einer Interpolation von Daten, die durch ein Verfahren nach Anspruch 1 bereitgestellt sind, betreffend eine Endgesamtenergie, die von einer Windkraftanlage (WT) bezüglich zwei getrennter Zeitsegmente erzeugt wurde, die durch ein spezifisches Zeitsegment getrennt wurden, zum Bestimmen einer geschätzten Endenergieerzeugung bezüglich des spezifischen Zeitsegments.

12. Verwendung nach Anspruch 11, wobei die Daten, welche die Endgesamtenergie, die von einer Windkraftanlage (WT) erzeugt wurde, bezüglich des spezifischen Zeitsegments betreffen, Daten sind, die fehlen oder als unzuverlässig gewertet wurden.

13. Verwendung nach Anspruch 11 oder 12, wobei die Verwendung das Bestimmen, anhand von Messung, der Endgesamtenergie, die bezüglich der beiden getrennten Zeitsegmente erzeugt wurde, betrifft.

14. Computerprogrammprodukt, umfassend Anweisungen, die, wenn das Programm durch einen Computer ausgeführt wird, den Computer dazu veranlassen, die Schritte eines Verfahrens nach einem der Ansprüche 1-10 durchzuführen.

15. SCADA-System (Supervisory Control And Data Acquisition System), umfassend ein Computerprogrammprodukt, wie in Anspruch 14 definiert.

**Revendications**

1. Procédé d'amélioration d'une communication de données de fonctionnement à partir d'une éolienne (WT) durant un fonctionnement de celle-ci ; ledit procédé comprenant les étapes consistant à :

   i) commander le fonctionnement de ladite éolienne (WT) en utilisant un système de commande (CS) ;
   ii) par rapport à un segment temporel prédéterminé permettre à un ou plusieurs capteurs (S$_1$, S$_2$, S$_3$, ..., S$_N$) de détecter une ou plusieurs valeurs de paramètre représentant l'ampleur d'une production de puissance de ladite éolienne et permettre auxdits capteurs de transmettre lesdites une ou plusieurs valeurs de paramètre audit système de commande (CS) ;
   iii) à partir desdites une ou plusieurs valeurs de paramètre transmises audit système de commande (CS) à l'étape ii), permettre audit système de commande de déterminer une production totale d'énergie dans ledit segment temporel ;
   iv) à partir desdites une ou plusieurs valeurs de paramètre transmises audit système de commande (CS), permettre audit système de commande de déterminer une valeur accumulée, représentant une production accumulée d'énergie par ladite éolienne jusqu'à la fin dudit segment temporel spécifique ;
   v) permettre audit système de commande (CS) de transmettre, à un système de surveillance (MS), des données déterminées à l'étape iii) et iv) ;

vi) répéter les étapes i) à v) par rapport à des segments temporels ultérieurs ;

vii) par rapport à un laps de temps comprenant plusieurs desdits segments temporels, permettre audit système de surveillance (MS) d'évaluer la fiabilité de données se rapportant à la production totale d'énergie dans un segment temporel spécifique dudit laps de temps, et facultativement permettre audit système de surveillance (MS) de corriger ces données au cas où ces informations seraient évaluées comme étant non fiables, obtenant ainsi des données corrigées se rapportant à une production totale d'énergie estimée par rapport à un ou plusieurs segments temporels spécifiques dans ledit laps de temps.

2. Procédé selon la revendication 1, dans lequel à l'étape vii) lesdites données étant évaluées comme étant non fiables par ledit système de surveillance (MS), pour une ou plusieurs des raisons suivantes :

- des données par rapport à un ou plusieurs desdits segments temporels devant être transmises par ledit système de commande (CS) n'ont pas été reçues par ledit système de surveillance (MS) ; et/ou
- des données se rapportant à une production accumulée d'énergie par ladite éolienne (WT) indiquent que ladite production accumulée diminue au fil du temps ; et/ou
- des données se rapportant à une production accumulée d'énergie par ladite éolienne (WT) indiquent que ladite production accumulée augmente au fil du temps davantage que ce qui est théoriquement possible, étant donné la puissance maximale nominale de ladite éolienne ; et/ou
- un remplacement d'un support de stockage dans un système de commande, tel qu'un disque à mémoire flash ; et/ou
- une valeur erronée entrée manuellement par un technicien ; et/ou
- des données se rapportant à une production accumulée d'énergie par ladite éolienne (WT) montent en flèche de manière non fiable en raison d'un remplacement d'un dispositif de commande ou de la commande ; et/ou
- une correction intentionnelle ou involontaire de l'horloge système du système de commande ; et/ou
- une correction intentionnelle ou involontaire de l'horloge système du système de surveillance et/ou
- une synchronisation de données à partir d'un système de surveillance jusqu'à un autre système de surveillance.

3. Procédé selon la revendication 1 ou 2, dans lequel lesdites valeurs de paramètre représentant une production de puissance de ladite éolienne telles que déterminées à l'étape ii) se rapportent à une ou plusieurs de ce qui suit :

- une puissance moyenne produite par rapport audit segment temporel ; et/ou
- une production totale d'énergie par rapport audit segment temporel.

4. Procédé selon l'une quelconque des revendications précédentes, dans lequel à l'étape vii) lesdites données qui sont évaluées comme étant non fiables sont corrigées par une interpolation de données.

5. Procédé selon la revendication 4, dans lequel par rapport à un segment spécifique par rapport auquel la production totale d'énergie dans ce segment temporel est évaluée comme étant non fiable, ladite production totale d'énergie estimée est trouvée en effectuant une interpolation entre des données se rapportant à une production accumulée d'énergie par ladite éolienne jusqu'à la fin d'un premier segment temporel, et des données se rapportant à une production accumulée d'énergie par ladite éolienne jusqu'à la fin d'un second segment temporel ; dans lequel ledit premier segment temporel précède ledit segment spécifique, et dans lequel ledit second segment temporel suit ledit segment temporel spécifique.

6. Procédé selon l'une quelconque des revendications précédentes, dans lequel chaque segment temporel dans ledit laps de temps présente des durées égales.

7. Procédé selon l'une quelconque des revendications précédentes, dans lequel ledit procédé est effectué automatiquement ;
et/ou
dans lequel ledit procédé est effectué de manière continue ou de manière régulière par rapport à des laps de temps successifs.

8. Procédé selon l'une quelconque des revendications précédentes, dans lequel un ou plusieurs desdits capteurs ($S_1$, $S_2$, $S_3$, ..., $S_N$) à l'étape ii) détectent une ou plusieurs valeurs de paramètre représentant une production de puissance active de ladite éolienne et/ou une production de puissance réactive de ladite éolienne et/ou de l'énergie active produite par ladite éolienne et/ou de l'énergie réactive produite par ladite éolienne.

9. Procédé selon l'une quelconque des revendications précédentes, dans lequel ledit procédé implique de garder un journal de données (DL), journalisant un ensemble de données provenant dudit système de surveillance (MS) et se rapportant à une ou plusieurs des entrées suivantes : des données déterminées à l'étape ii) et/ou iii) et/ou iv) ; des estampilles temporelles de début et/ou de fin de segments temporels individuels dans ledit laps de temps ; des données corrigées telles que déterminées à l'étape vii) ; des estampilles temporelles se rapportant au début et/ou à la fin dudit laps de temps.

10. Procédé selon la revendication 9, dans lequel lesdites données corrigées telles que déterminées à l'étape vii) se rapportent à une production totale d'énergie estimée dans un ou plusieurs segments temporels spécifiques dudit laps de temps ;
et/ou
dans lequel un premier journal de données (DL) originales est gardé qui journalise et stocke des données originales reçues le système de surveillance ; et dans lequel un second journal de données (CDL) est gardé, qui journalise et stocke des données corrigées de journaux qui représentent des données originales qui ont été corrigées par le procédé selon l'une quelconque des revendications précédentes.

11. Utilisation d'une interpolation de données fournies par un procédé selon la revendication 1, se rapportant à l'énergie totale accumulée produite par une éolienne (WT) par rapport à deux segments temporels séparés, séparés par un segment temporel spécifique, pour déterminer une production totale d'énergie estimée par rapport audit segment temporel spécifique.

12. Utilisation selon la revendication 11, dans laquelle les données se rapportant à l'énergie totale accumulée produite par une éolienne (WT) par rapport audit segment temporel spécifique sont des données qui manquent ou qui sont considérées comme non fiables.

13. Utilisation selon la revendication 11 ou 12, dans laquelle ladite utilisation implique une détermination, par une mesure, de ladite énergie totale accumulée produite par rapport auxdits deux segments temporels séparés.

14. Produit programme d'ordinateur comprenant des instructions qui, lorsque le programme est exécuté par un ordinateur, amènent l'ordinateur à réaliser les étapes d'un procédé selon l'une quelconque des revendications 1-10.

15. Système SCADA (système d'acquisition et de contrôle de données) comprenant un produit programme d'ordinateur tel que défini dans la revendication 14.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014203562 A
- EP 2866190 A